# EUROPÄISCHE PATENTSCHRIFT

(11) **EP 1 564 473 B1**
(45) Veröffentlichungstag und Bekanntmachung des Hinweises auf die Patenterteilung: **23.01.2008**
(21) Anmeldenummer: 04023772.9
(22) Anmeldetag: 06.10.2004
(51) Int. Cl.: F16L 37/091, F16L 37/092, F16L 33/22

(54) **Steckfitting mit einem Klemmring**
Coupling with clamping ring
Raccord à bague de serrage

(30) Priorität: 16.02.2004 DE 102004007745
(43) Veröffentlichungstag der Anmeldung: 17.08.2005
(73) Patentinhaber: HENCO Industries NV, 2200 Herentals (BE)
(72) Erfinder: Hendrickx, Willy, 2200 Herentals (BE)
(74) Vertreter: Starke, Günter

(56) Entgegenhaltungen:
- EP-A- 0 587 131
- DE-A1- 19 856 999
- FR-A- 2 282 082
- NL-C2- 1 019 377
- US-A- 5 348 354
- US-B1- 6 206 435

## Beschreibung

Die Erfindung betrifft einen Steckfitting zum Verbinden mit zumindest einem Rohr, insbesondere einem Kunststoff Metall-Kunststoff-Verbundrohr, wobei der Steckfitting zumindest einen Anschlussbereich für eine Verbindung mit dem Rohr aufweist und ein Endabschnitt des Rohres bis an einen Bund in den Steckfitting einschiebbar ist, wobei das Rohr mittels einer mit dem Steckfitting zusammenwirkenden Klemmring sicherbar ist, wobei der Steckfitting einen Grundkörper mit einem inneren Rohrträger und eine mit dem Grundkörper zusammenwirkende Hülse aufweist, wobei der Rohrträger und die Hülse einen Ringraum bilden, in den das Rohr einschiebbar ist, und wobei der Klemmring in der Hülse von einem Spannring gehalten ist.

Ein derartiger Steckfitting ist aus der NL-C2-1 019 377 bekannt. Dieser Steckfitting weist einen Anschlussbereich für ein Rohr auf, das in einen Ringraum im Bereich des Anschlussbereichs eingeschoben wird. Ein zwischen einer Hülse und einem Spannring eingespannter Klemmring soll verhindern, dass ein eingeschobenes Rohr bei einer Zugbelastung aus dem Steckfitting gelöst wird. Der Klemmring ist in dem Ringraum frei bewegbar und weist abgewinkelte lange Klemmarme auf, die bei einer Zugbelastung bis an den inneren Rohrträger herangezogen werden können. Dadurch ist das Risiko einer Beschädigung des eingeschobenen Rohrs groß. Zudem können die Klemmarme aufgrund ihrer Länge bei einer Zugbelastung durch das eingeschobene Rohr leicht verformt werden.

Schließlich ist eine zerstörungsfreie Demontage eines eingeschobenen Rohres nicht möglich.

Der Erfindung liegt die Aufgabe zugrunde, einen Steckfitting bereitzustellen, der eine hohe Montagesicherheit bietet und dabei problemlos zu handhaben ist.

Zunächst gewährleistet die auf die Wandstärke des Rohrs abgestimmte Weite des Ringraums, dass das Rohr unverkantet in den Ringraum eingeführt wird, während gleichzeitig eine Verformung des Rohrs durch den inneren Rohrträger ausgeschlossen ist. An die Steifigkeit des Rohrs sind somit keine besonderen Anforderungen gestellt. Dadurch, dass der Klemmring nicht in eine Nut eingesetzt werden muss, sondern von einem Spannring in der Hülse gehalten ist, ist eine einfache Montage des Klemmrings möglich, indem dieser zunächst in die Hülse eingeschoben wird und anschließend der Spannring montiert wird.

Die zugrundeliegende Aufgabe wird gemäß einer ersten Ausführungsform dadurch gelöst, dass der Spannring an seinem Innenumfang eine Ausnehmung aufweist, die sich bis zu dem dem Klemmring zugewandten Ende erstreckt und dass die Ausnehmung als Stufenausnehmung ausgebildet ist. Die Stufenausnehmung ist so ausgebildet, dass diese neben einem einen weiteren Dichtring aufnehmenden Bereich eine Stufe aufweist, die sich bis zu dem dem Klemmring zugewandten Ende erstreckt. Zuerst wird der Dichtring in den Spannring eingeschoben und dann ein Ring eingesetzt, der aufgrund der stufenförmigen Ausbildung eine definierte Lage einnimmt und einerseits den Dichtring genau positioniert und andererseits als weitere Anlage für den Klemmring dient. Der Spannring kann auch anstelle der Stufenausnehmung nur eine Innenringnut aufweisen, in die der Dichtring eingelegt wird.

Die zugrundeliegende Aufgabe wird gemäß einer zweiten Ausführungsform dadurch gelöst, dass der Spannring an seinem Innenumfang eine Ausnehmung aufweist, die sich bis zu dem dem Klemmring zugewandten Ende erstreckt, und dass die Ausnehmung als Kegelringausnehmung ausgebildet ist. In diese Kegelringausnehmung ist dann eine Kegelringhülse eingesetzt, wobei in weiterer Ausgestaltung die Kegelringausnehmung und die Kegelringhülse in den zusammenwirkenden Bereichen Verzahnungen aufweisen. Weiterhin weist die Kegelringhülse auf der mit dem Rohr zusammenwirkenden Seite Zähne auf. Schließlich weist die Kegelringhülse einen die Kegelringhülse auftrennenden Spalt und/oder biegeelastische Bereiche auf. Mit diesen zusammenwirkenden Ausgestaltungen wird folgendes erreicht. Wenn das Rohr wechselweise von kalten oder warmen Wasser durchströmt wird, (beispielsweise bei Verwendung in einer Fußbodenheizung, hervorgerufen durch die Temperaturregelung) dehnt sich das Rohr bei warmem Wasser in Längsrichtung schrumpft entsprechend bei kaltem Wasser. Diese Bewegungen üben eine Wechselbelastung auf den Klemmring aus, die durch das Zusammenwirken der Kegelringausnehmung mit der Kegelringhülse und dem Rohr zumindest stark verringert wird. Bei abkühlenden Wasser übt das Rohr über den in das Rohr eingreifenden Klemmring eine Kraft auf die Kegelringhülse in Richtung zu dem freien Ende des Klemmrings aus. Da die Kegelringhülse durch die Kegelform und die mit dem Klemmring zusammenwirkende Verzahnung im wesentlichen nur in Richtung zu dem Rohr ausweichen kann, greift sie mit den Zähnen in das Rohr ein und verhindert eine Schrumpfung des Rohrs. Damit ist die Wechselbelastung des Klemmrings stark verringert und gleichzeitig eine noch bessere Festlegung des Rohrs erreicht.

Die Kegelringhülse ist weiterer Ausgestaltung aus Metall, beispielsweise Messing gefertigt. Insbesondere bei dieser Fertigung weist die Kegelringhülse den erwähnten Spalt und vorzugsweise drei auf dem Umfang der Kegelringhülse verteilte biegeelastische Bereiche auf. Dadurch wird die Bewegung des Eingreifens in das Rohr erleichtert. Die Kegelringhülse kann aber auch aus Kunststoff gefertigt sein. In diesem Fall weist sie nur einen Spalt auf, da Kunststoff genügend biegeelastisch ist , um die nötige Verformung beim Eingreifen in das Rohr zu ermöglichen.

In Weiterbildung der Erfindung ist der Klemmring scheibenförmig mit nach innen weisenden Haltezähnen ausgebildet. Diese Ausbildung ermöglicht eine unkomplizierte Herstellung durch beispielsweise Ausstanzen aus einer Metallplatte. Die Haltezähne können auf der später mit dem Rohr zusammenwirkenden Seite gebogen oder gerade ausgebildet sein. Sind sie gebogen ausgebildet, kann die Bogenform der Kontur des Rohrs folgen oder entgegengesetzt ausgerichtet sein.

In weiterer Ausgestaltung der Erfindung sind die Haltezähne gegenüber dem scheibenförmigen Teil des Klemmrings abgewinkelt. Der Winkel beträgt dabei zwischen 10 Grad bis 80 Grad, vorzugsweise 30 Grad bis 50 Grad. Montiert wird der so ausgebildete Klemmring in der Form, dass die abgewinkelten Haltezähne zu dem Bund des Steckfittings weisen. Ein Einschieben des Rohrs ist unter gegebenenfalls einer geringfügigen weiteren Aufbiegung des Haltezähne problemlos möglich, während bei einer Zugbelastung des Rohrs die Haltezähne in die äußere Schicht des Rohrs eingreifen.

In Weiterbildung der Erfindung ist der Klemmring bevorzugt einstückig aus einem metallischen Werkstoff, wie beispielsweise Edelstahl, Kupfer, Messing oder Aluminium gefertigt. Diese Werkstoffe sind einerseits korrosionsbeständig und weisen andererseits eine hohe Festigkeit auf.

In weiterer Ausgestaltung der Erfindung ist die Hülse auf das Grundteil kraft- und formschlüssig aufgesetzt. Dadurch können die Hülse und das Grundteil separat voneinander gefertigt werden. Bevorzugt weist die Hülse ein Gewinde auf, das mit einem Gewinde an dem Grundteil zusammenwirkt. Bei dieser Ausbildung ist eine geeignete Sicherungsvorrichtung vorhanden, die verhindert, dass die montierte Hülse (problemlos) wieder abgeschraubt werden kann. Diese Sicherungsvorrichtung kann beispielsweise ein bei der Montage in das Gewinde eingegebener Kleber oder ein Klemmrand sein, der über einen ringförmigen Bund an dem Grundteil greift. Alternativ weist die Hülse umlaufende Haltenasen auf, die in damit zusammenwirkende Haltenuten an dem Grundteil eingeklipst werden. Um eine definierte Lage der Hülse in Bezug zu dem Grundteil sicherzustellen, weist die Hülse einen Anschlag auf, der gegen den ringförmigen Bund an dem Grundteil anliegt.

In Weiterbildung der Erfindung ist in die Hülse eine Kontrollöffnung eingearbeitet, oder die Hülse weist einen durchsichtigen Bereich auf. Durch diese Ausgestaltung ist eine Lagekontrolle des eingeschobenen Rohres möglich.

In weiterer Ausgestaltung ist der Spannring kraft- und formschlüssig mit der Hülse verbunden. Diese Verbindung kann in einer ersten Ausführung wieder in Form von zusammenwirkenden Haltenasen und Haltenuten ausgestaltet sein. Bevorzugt weist der Spannring aber ein Gewinde auf, dass mit einem entsprechenden Gewinde in der Hülse zusammenwirkt. Zur problemlosen Montage sind in die äußere Stirnseite des Spannrings Vertiefungen zum Ansetzen eines Werkzeugs eingelassen.

In Weiterbildung der Erfindung bilden der Spannring und die Hülse einen Ringspalt, in dem der Klemmring mit dem scheibenförmigen Teil festgelegt ist. Dabei ist in die Hülse eine Abkantung so eingelassen, dass ein erweiteter Bereich geschaffen ist, in den die abgewinkelten Haltezähne hineinreichen. Der Klemmring kann auf der gegenüberliegenden Seite gerade ausgebildet sein oder aber eine der Abkantung folgende Kontur aufweisen, die folglich die abgewinkelten Haltezähne untergreifen.

In weiterer Ausgestaltung der Erfindung weist der Rohrträger nach außen weisende umlaufende Widerhaken auf. Dabei schließen wiederum in Weiterbildung die Widerhaken eine einen Dichtring aufnehmende Ringnut ein. Dadurch ist zusammenwirkend mit dem Klemmring eine zuverlässige und dichte Befestigung des Rohrs sichergestellt.

In Weiterbildung der Erfindung ist der durchsichtige Bereich durch eine Materialabtragung der Hülse gebildet. Diese Ausbildung ist vorteilhaft dann einsetzbar, wenn das Material der Hülse nur schwach durchsichtig ist und ohne den Materialabtrag das eingeschobene Rohr nicht oder nur schwer zu erkennen ist.

In weiterer Ausgestaltung ist in dem Spannring benachbart zu der Ausnehmung eine Innenringnut zur Aufnahme eines Runddichtrings ausgebildet ist. Der schon vorher erwähnte durchsichtige Bereich und die den zusätzlichen Dichtring ausnehmende Innenringnut haben den Vorteil, dass in den Montagebereich des Steckfittings und insbesondere an den Klemmring beispielsweise beim Eingießen in einem Estrich keine aggressiven Stoffe gelangen können.

In weiterer Ausgestaltung der Erfindung ist eine die Haltezähne des Klemmrings abstützende Stützscheibe vorgesehen, die zwischen dem Klemmring und der dem Spannring oder der Kegelringhülse angeordnet ist. Die Stützscheibe ist vorzugsweise aus einem metallischen Werkstoff wie beispielsweise Edelstahl hergestellt und weist wie der Klemmring eine scheibenförmige Ausbildung auf. Dabei erstreckt sich die Stützscheibe über die Abwinklung des Klemmrings hinaus bis etwa beispielsweise zu der halben Länge der Haltezähne. Die Stützscheibe verhindert, dass sich die Haltezähne beispielsweise bei extremer Zugbelastung des Rohrs gegenüber dem Steckfitting umbiegen kann und somit die Funktion des Steckfittings nicht mehr sichergestellt ist. Die Stützscheibe kann auch einteilig mit dem Klemmring gefertigt sein oder mit diesem beispielsweise durch Kleben oder Schweißen verbunden sein.

In weiterer Ausgestaltung ist ein Kegelring vorgesehen, dessen Kegelseiten mit dem Spannring und der Kegelringhülse zusammenwirken, während dessen Grundseite an dem Klemmring oder der Stützscheibe anliegt. Beide Kegelseiten weisen mit den Verzahnungen zusammenwirkende verzahnte Oberflächen auf. Auch durch diese Ausgestaltung wird die Wechselbelastung auf den Klemmring, die durch das wechselweise kalte und warme Wasser hervorgerufen werden, zumindest stark verringert.

Das Grundteil und die Hülse sowie auch der Spannring sind bevorzugt aus einem Kunststoffwerkstoff, bevorzugt P.V.D.F für das Grundteil und P.V.D.F oder Polyacetal (POM) für die Hülse hergestellt. Als Kunststoffwerkstoff kommen weiterhin hochwertige Kunststoffe wie Polysulfone, beispielsweise UDEL P-1700 NT 11970217 oder UDEL GF-120 NT ZV 1003 oder auch sogenannte Polyphenylsulfone, beispielsweise RADEL R 5000 NT M 97068 T oder gegebenenfalls eine Kombination davon in Frage. Diese Werkstoffe erfüllen alle Anforderungen, die bezüglich der Festigkeit, der Dauerhaltbarkeit und sonstiger Verordnungen im Sanitärbereich gestellt sind. Denkbar und vorgesehen ist aber auch eine Herstellung aus einem metallischen Werkstoff, wie Messing, Edelstahl oder Aluminium. Diese Werkstoffe sind gut verträglich mit dem Rohrmaterial. Dieses Rohrmaterial ist bevorzugt ein Kunststoff-Metall-Kunststoff-Verbundwerkstoff, wobei das Metall (bevorzugt Aluminium) eine mittlere Tragschicht des Rohres bildet. Das Rohr kann aber auch beispielsweise aus Kupfer oder Edelstahl hergestellt oder ein normales HDPE-Rohr sein.

Weitere vorteilhafte Ausgestaltungen der Erfindung sind der Zeichnungsbeschreibung zu entnehmen, in der in den Figuren dargestellte Ausführungsbeispiele näher beschrieben ist.

Es zeigen:
- Fig. 1:: eine Schnittdarstellung einer ersten Ausführungsform des Steckfittings mit montiertem Rohr, die nicht unter den Schutzbereich des Patents fällt,

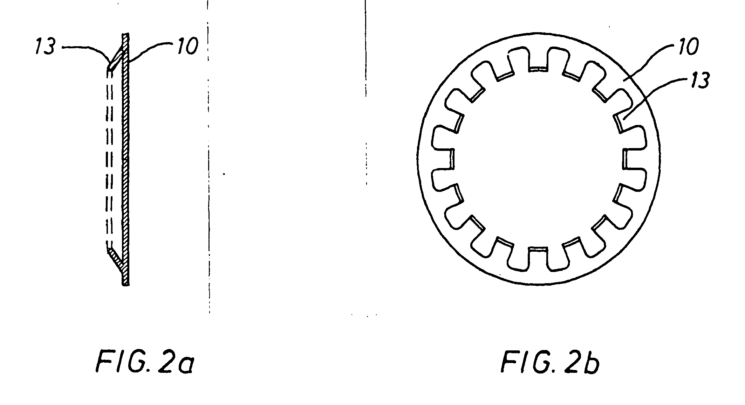

- Fig. 2a:: eine Detailansicht des Klemmrings,
- Fig. 2b:: eine weitere Detailansicht des Klemmrings,
- Fig. 3:: eine Schnittdarstellung einer zweiten Ausführungsform , die unter den Schutzbereich des Patents fällt des Steckfittings mit montiertem Rohr, die unter den Schutzbereich des Patents fällt,
- Fig. 4:: eine Ausführungsvariante des Spannrings der Ausführungsform gemäß Fig. 3.
- Fig. 5:: eine Schnittdarstellung einer dritten Ausführungsform , die unter den Schutzbereich des Patents fällt des Steckfittings mit montiertem Rohr, die unter den Schutzbereich des Patents fällt,
- Fig. 6:: eine Detailansicht (Schnitt) des Spannrings gemäß Fig. 5,
- Fig. 6a:: eine weitere Detailansicht des Klemmrings gemäß Fig. 5,
- Fig. 6b:: eine weitere Detailansicht des Klemmrings gemäß Fig. 5,
- Fig. 7:: eine Detailansicht (Schnitt) der Kegelringhülse gemäß Fig. 5,
- Fig. 7a:: eine weitere Detailansicht der Kegelringhülse gemäß Fig. 5,
- Fig. 8:: eine Detailansicht (Schnitt) der Kegelringhülse gemäß Fig. 5 in einer zweiten Ausführungsform,
- Fig. 8a:: eine weitere Detailansicht der Kegelringhülse gemäß Fig. 5 in einer zweiten Ausführungsform,
- Fig. 8b:: eine weitere Detailansicht der Kegelringhülse gemäß Fig. 5 in einer zweiten Ausführungsform,
- Fig. 9:: eine Schnittdarstellung einer vierten Ausführungsform des Steckfittings mit montiertem Rohr und
- Fig. 10:: eine Schnittdarstellung einer fünften Ausführungsform des Steckfittings mit montiertem Rohr.

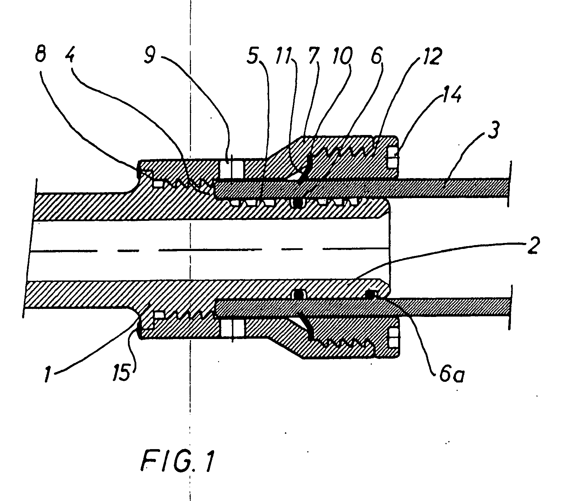

Der in Fig. 1 dargestellte Steckfitting wird im Sanitärinstallationsbereich und im Heizungsbau verwendet. Insbesondere werden mit derartigen Steckfittingen Wasserleitungen oder Heizungsleitungen verbunden oder mit den entsprechenden Anschlussstücken für beispielsweise Zapfstellen oder dergleichen versehen. Dementsprechend sind neben dem dargestellten Steckfitting auch andere Varianten, beispielsweise Dreifachkupplungen oder Anschlussstücke für Zapfstellen oder ähnliches möglich. Weiterhin kann der erfindungsgemäße Steckfitting in allen handelsüblichen Größen, insbesondere Durchmessern, gefertigt werden.

Der Steckfitting gemäß Fig. 1 weist einen Grundkörper 1 auf, der bevorzugt aus Kunststoff gefertigt ist. Dieser Grundkörper 1 weist in dem Ausführungsbeispiel einen Anschlussbereich mit einem inneren Rohrträger 2 für eine Verbindung mit einem Rohr 3 auf, wobei das Rohr 3 insbesondere ein Verbundrohr ist, das aus einer inneren Kunststoffschicht, einer Metalltragschicht (bevorzugt aus Aluminium) und einer äußeren Kunststoffschicht besteht.

Der innere Rohrträger 2 weist auf der oberen Zeichnungsseite zu einem Bund 4 weisende Widerhaken 5 auf, die in etwa mittig eine Ringnut zum Einlegen eines Runddichtrings 6 einschließen. Ausgehend von der Ringnut weist der innere Rohrträger 2 zu seinem freien Ende hin mehrere Reihen Widerhaken 5 und zu dem Bund 4 ebenfalls mehrere Reihen Widerhaken 5 auf. Auf der unteren Zeichnungsseite ist der innere Rohrträger ohne Widerhaken dargestellt, dafür ist ein zweiter Runddichtring 6a in einer weiteren Ringnut an der dargestellten Stelle unterhalb eines Spannrings angeordnet.

Auf den Grundkörper 1 ist eine Hülse 7 aufgesetzt und im Bereich des Bundes 4 mit dem Grundkörper 1 verschraubt. Diese Verbindung ist mit einem zusätzlichen Klemmrand 15 so ausgestaltet, dass die Hülse 7 an dem Bund 4 mit einem Anschlag 8 anliegt und ein nachträgliches Lösen nicht mehr oder nur schwerlich möglich ist.

Die Hülse 7 bildet zusammen mit dem inneren Rohrträger 2 einen Ringraum zur Aufnahme des Rohrs 3. Das Rohr 3 ist bis an den Bund 4 in den Ringraum einschiebbar. Dieser Vorgang ist durch eine Kontrollöffnung 9 kontrollierbar, d. h., wenn das Rohr 3 an dem Bund 4 anliegt, ist es durch die daneben liegende Kontrollöffnung 9 sichtbar. In dem Steckfitting ist das Rohr 3 von einem Klemmring 10, der in einen Ringspalt 11, den die Hülse 7 und ein mit der Hülse 7 verschraubter Spannring 12 bilden, eingesetzt ist, festgehalten. Dabei ist der Ringspalt 11 mit einer Abkantung in der Hülse 7 so ausgebildet, dass abgewinkelte Haltezähne 13 insbesondere beim Einschieben des Rohrs 3 genügend freien Raum für ein Ausweichen haben. Der Spannring 12 weist stirnseitig vier Ausnehmungen 14 auf, in die ein Werkzeug einsetzbar ist. Mit diesem Werkzeug kann der Spannring 12 in die Hülse 7 eingeschraubt werden und auch wieder heraus geschraubt werden. Somit ist es möglich, das Rohr 3 zerstörungsfrei von dem Steckfitting zu lösen.

Der Klemmring 10 ist aus einem metallischen Material, insbesondere Edelstahl hergestellt. Der Klemmring 10 ist scheibenförmig ausgebildet und mit den zuvor genannten nach innen weisenden Haltezähnen 13 versehen. Diese Haltezähne 13 sind um 30 Grad bis 50 Grad abgewickelt. Dabei ist der Klemmring 10 so in den Ringspalt 11 eingesetzt, dass die abgewickelten Haltezähne 13 in Richtung zu dem Bund 4 weisen. Die Haltezähne 13 sind auf der zu dem Rohr weisenden Seite gerade ausgebildet.

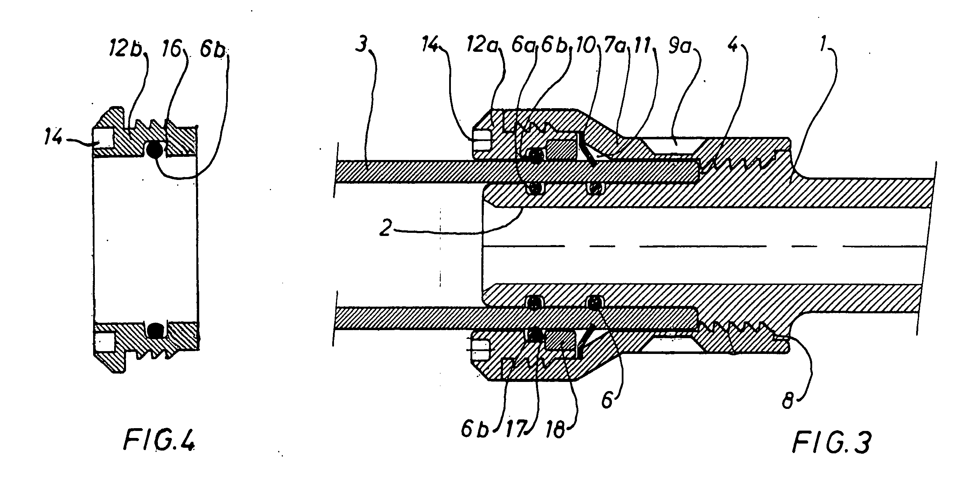

Der Steckfitting gemäß Fig. 3 weist im Unterschied zu der Ausführung gemäß Fig. 1 eine Hülse 7a auf, bei der anstelle einer Kontrollöffnung 9 ein durchsichtiger Bereich 9a zur Lagekontrolle des eingeschobenen Rohrs 3 vorgesehen ist. Dieser durchsichtige Bereich 9a ist durch einen Materialabtrag an der entsprechenden Stelle der aus einem schwach durchsichtigen Material gefertigten Hülse 7a hergestellt. Der Spannring 12a weist an seinem Innenumfang eine Ausnehmung auf, die einen weiteren Dichtring 6b aufnimmt. Dabei kann die Ausnehmung so gestaltet sein, dass diese als Innenringnut 16 (Fig. 4) ausgebildet ist, in die der Dichtring 6b eingelegt wird. In weiterer Ausgestaltung ist die Ausnehmung als Stufenausnehmung 17 ausgebildet (Fig. 3), die sich bis zu dem dem Klemmring 10 zugewandten Ende erstreckt. Bei dieser Ausgestaltung wird zuerst der Dichtring 6b in die Stufenausnehmung 17 eingeschoben und dann ein Ring 18 eingesetzt, der aufgrund der stufenförmigen Ausbildung der Stufenausnehmung 17 eine definierte Lage einnimmt. Einerseits positioniert der Ring 18 den Dichtring 6b und andererseits dient er als weitere Anlage für den Klemmring 10.

Die Ausführungsformen gemäß den Fig. 3 und Fig. 4 haben den Vorteil, dass in den Montagebereich des Steckfittings und insbesondere an den Klemmring 10 beispielsweise beim Eingießen in einem Estrich keine aggressiven Stoffe gelangen können.

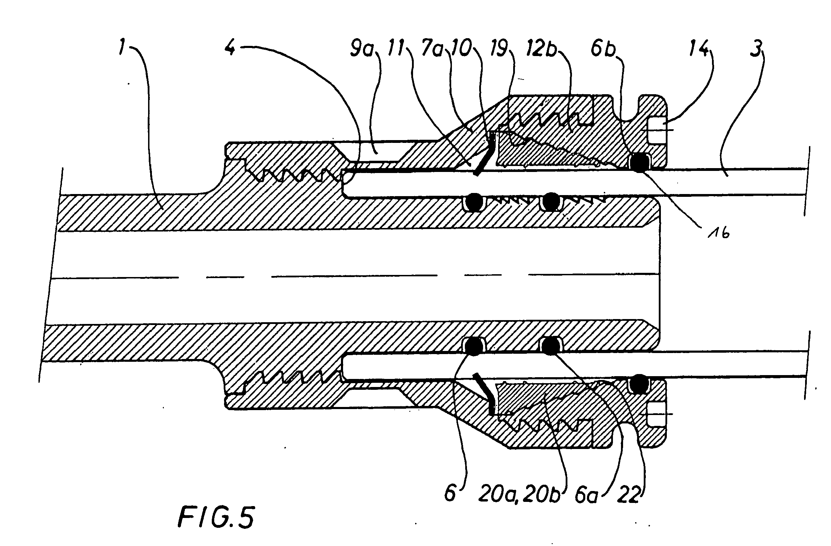

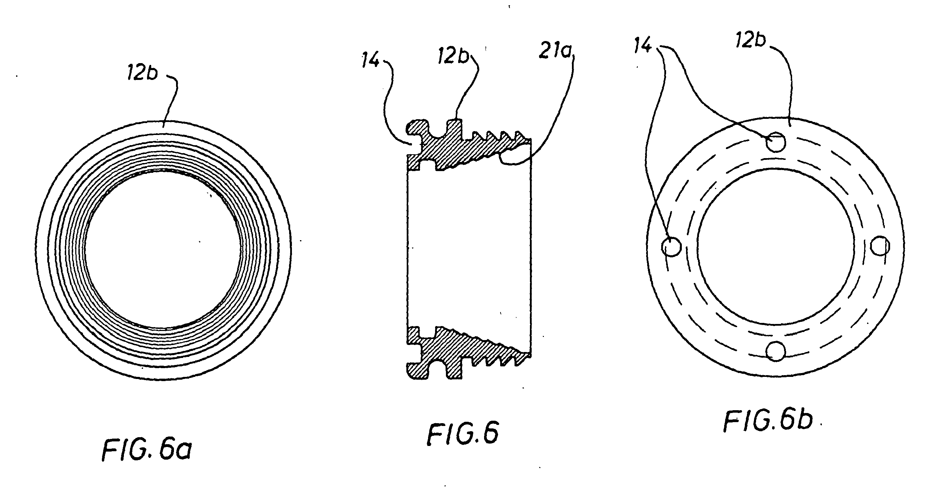

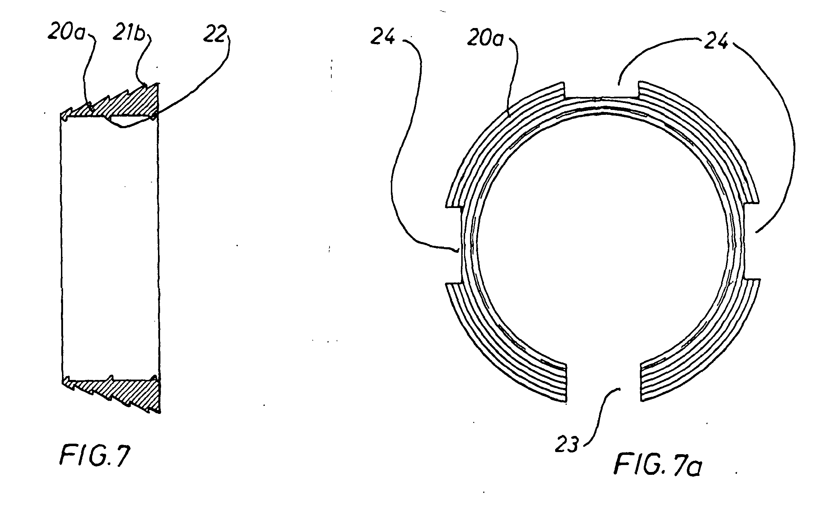

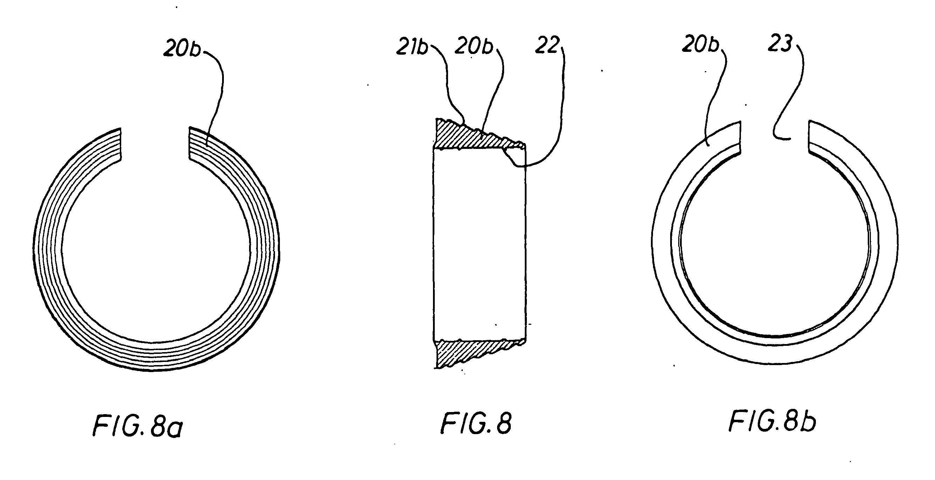

Die Ausführungsform gemäß Fig. 5 unterscheidet sich von der Ausführungsform nach Fig. 3 dadurch, dass die Ausnehmung an den Spannring 12b als Kegelringausnehmung 19 ausgebildet ist. Detailansichten des Spannrings 12b sind in den Fig. 6, Fig. 6a und Fig. 6b dargestellt. In diese Kegelringausnehmung 19 ist eine Kegelringhülse 20a (Fig. 7, 7a) oder 20b (Fig. 8, Fig. 8a, Fig. 8b) eingesetzt. Beide Kegelringhülsen 20a 20b und die Kegelringausnehmung 19 weisen in den zusammenwirkenden Bereichen Verzahnungen 21a 21b auf. Weiterhin weisen die Kegelringhülsen 20a 20b auf der mit dem Rohr 3 zusammenwirkenden Seite Zähne 22 auf.

Beide Kegelringhülsen 20a, 20b weisen einen die Kegelringhülse 20a, 20b auftrennenden Spalt 23 und zusätzlich die Kegelringhülse 20b drei auf deren Umfang verteilt angeordnete biegeelastische Bereiche 24 auf.

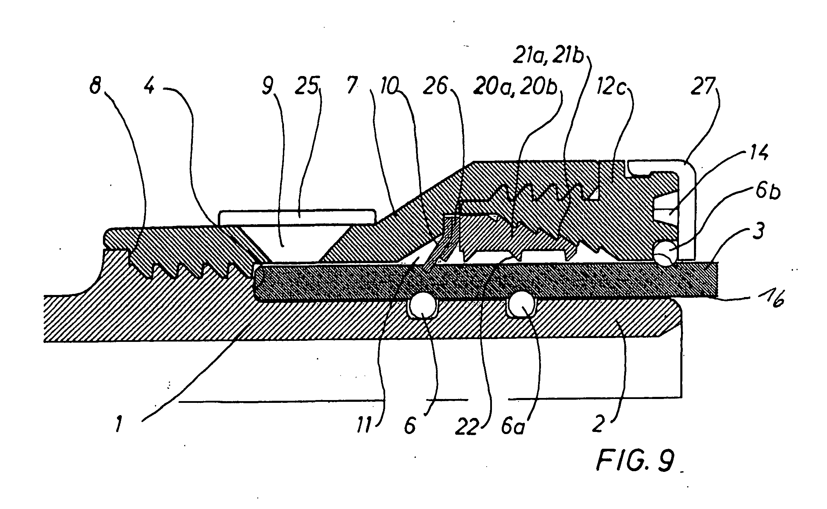

Bei der Ausführungsform gemäß Fig. 9 ist die Kontrollöffnung 9 von einer transparenten Abdichtkappe 25 umfasst. Diese Lösung kommt insbesondere dann zur Abwendung, wenn die Hülse 7 aus einem nicht transparenten Werkstoff gefertigt ist, beziehungsweise wenn der Werkstoff der Hülse 7 eingefärbt ist. Die Abdichtkappe 25 ist bevorzugt aus Kunststoff gefertigt und zumindest soweit dicht auf die Hülse 7 aufgeschoben, dass kein Estrich in die Kontrollöffnung 9 eindringen kann. Dazu kann die Abdichtkappe 25 mit der Hülse 7, 7a verklebt sein. Weiterhin ist eine Stützscheibe 26 vorgesehen, die zwischen dem Klemmring 10 und der Kegelringhülse 20a, 20b angeordnet ist. Die Stützscheibe 26 erstreckt sich über die Abwinklung des Klemmrings 10 hinaus bis etwa zu der halben Länge der Haltezähne 13. Die Stützscheibe 26 verhindert, dass sich die Haltezähne 13 beispielsweise bei extremer Zugbelastung des Rohrs 3 gegenüber dem Steckfitting umbiegen kann. Schließlich ist eine Abdeckkappe 27 auf das rohrseitige Ende des Spannrings 12c aufgesetzt. Dabei hält die Abdeckkappe 27 den Dichtring 6b in der einseitig offenen Innenringnut 16. Die Abdeckkappe 27 ist bevorzugt über eine lösbare Verbindung mit dem Spannring 12c verbunden.

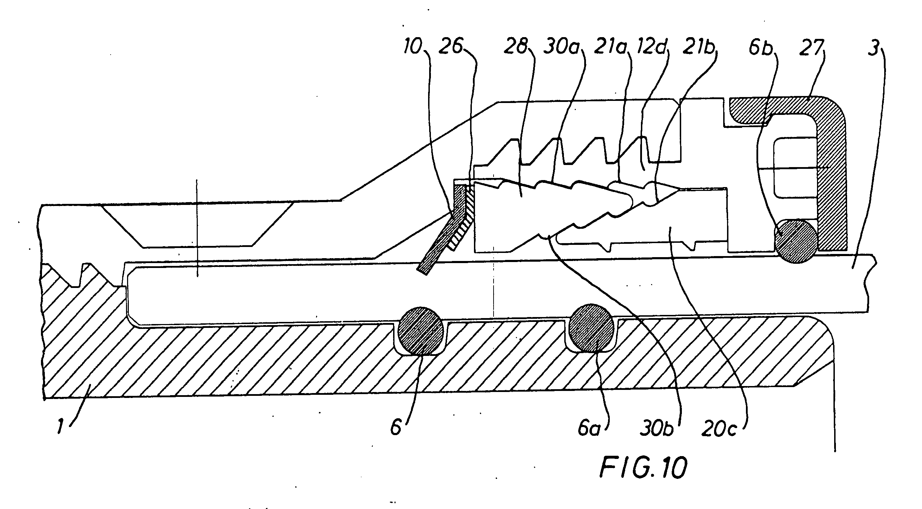

Die Ausführungsform gemäß Fig. 10 weist einen Kegelring 28 auf, der mit seiner Grundseite 29 an dem Klemmring 10 oder der Stützscheibe 26 anliegt. Eine erste Kegelseite 30a stützt sich an dem modifizierten Spannring 12d und die zweite gegenüberliegende Kegelseite 30b an der modifizierten Kegelringhülse 20c ab. Beide Kegelseiten 30a, 30b weisen mit den Verzahnungen 21a, 21b zusammenwirkende verzahnte Oberflächen auf.

### Bezugzeichenliste:

- 1: Grundkörper
- 2: Rohrträger
- 3: Rohr
- 4: Bund
- 5: Widerhaken
- 6, 6a, 6b: Runddichtring
- 7, 7a: Hülse
- 8: Anschlag
- 9, 9a: Kontrollöffnung
- 10: Klemmring
- 11: Ringspalt
- 12, 12a, 12b, 12c, 12d: Spannring
- 13: Haltezahn
- 14: Ausnehmung
- 15: Klemmrand
- 16: Innenringnut
- 17: Stufenausnehmung
- 18: Ring
- 19: Kegelringausnehmung
- 20a, 20b, 20c: Kegelringhülse
- 21a,21b: Verzahnung
- 22: Zahn
- 23: Spalt
- 24: biegeelastischer Bereich
- 25: Abdichtkappe
- 26: Stützscheibe
- 27: Abdeckkappe
- 28: Kegelring
- 29: Grundseite
- 30a, 30b: Kegelseite

## Patentansprüche

1. Steckfitting zum Verbinden mit zumindest einem Rohr (3), insbesondere einem Kunststoff-Metall-Kunststoff-Verbundrohr, wobei der Steckfitting zumindest einen Anschlussbereich für eine Verbindung mit dem Rohr (3) aufweist und ein Endabschnitt des Rohres (3) bis an einen Bund (4) in den Steckfitting einschiebbar ist, wobei das Rohr (3) mittels einer mit dem Steckfitting zusammenwirkenden Klemmring (10) sicherbar ist, wobei der Steckfitting einen Grundkörper (1) mit einem inneren Rohrträger (2) und eine mit dem Grundkörper (1) zusammenwirkende Hülse (7, 7a) aufweist, wobei der Rohrträger (2) und die Hülse (7, 7a) einen Ringraum bilden, in den das Rohr (3) einschiebbar ist, und wobei der Klemmring (10) in der Hülse (7, 7a) von einem Spannring (12, 12a, 12b, 12c, 12d) gehalten ist
**dadurch gekennzeichnet, dass** der Spannring (12a, 12b, 12c, 12d) an seinem Innenumfang eine Ausnehmung aufweist, die sich bis zu dem dem Klemmring (10) zugewandten Ende erstreckt, dass die Ausnehmung als Stufenausnehmung (17) ausgebildet ist, und dass in die Stufenausnehmung (17) ein Ring (18) eingesetzt ist.

2. Steckfitting zum Verbinden mit zumindest einem Rohr (3), insbesondere einem Kunststoff-Metall-Kunststoff-Verbundrohr, wobei der Steckfitting zumindest einen Anschlussbereich für eine Verbindung mit dem Rohr (3) aufweist und ein Endabschnitt des Rohres (3) bis an einen Bund (4) in den Steckfitting einschiebbar ist, wobei das Rohr (3) mittels einer mit dem Steckfitting zusammenwirkenden Klemmring (10) sicherbar ist, wobei der Steckfitting einen Grundkörper (1) mit einem inneren Rohrträger (2) und eine mit dem Grundkörper (1) zusammenwirkende Hülse (7, 7a) aufweist, wobei der Rohrträger (2) und die Hülse (7, 7a) einen Ringraum bilden, in den das Rohr (3) einschiebbar ist, und wobei der Klemmring (10) in der Hülse (7, 7a) von einem Spannring (12, 12a, 12b, 12c, 12d) gehalten ist
**dadurch gekennzeichnet, dass** der Spannring (12a, 12b, 12c, 12d) an seinem Innenumfang eine Ausnehmung aufweist, die sich bis zu dem dem Klemmring (10) zugewandten Ende erstreckt, dass die Ausnehmung als Kegelringausnehmung (19) ausgebildet ist, und dass in die Kegelringausnehmung (19) eine Kegelringhülse (20a, 20b, 20c) eingesetzt ist.

3. Steckfitting nach Anspruch 2,
**dadurch gekennzeichnet, dass** die Kegelringausnehmung (19) und die Kegelringhülse (20a, 20b) in den zusammenwirkenden Bereichen Verzahnungen (21a, 21 b) aufweisen.

4. Steckfitting nach einem der Ansprüche 2 und 3,
**dadurch gekennzeichnet, dass** die Kegelringhülse (20a, 20b, 20c) auf der mit dem Rohr (3) zusammenwirkenden Seite Zähne (22) aufweist.

5. Steckfitting nach einem der Ansprüche 2 bis 4,
**dadurch gekennzeichnet, dass** die Kegelringhülse (20a, 20b, 20c) aus Metall gefertigt ist.

6. Steckfitting nach Anspruch 5,
**dadurch gekennzeichnet, dass** die Kegelringhülse (20a, 20b, 20c) einen Spalt (23) und/oder biegeelastische Bereiche (24) aufweist.

7. Steckfitting nach einem der vorherigen Ansprüche,
**dadurch gekennzeichnet, dass** der Klemmring (10) scheibenförmig mit nach innen weisenden Haltezähnen (13) ausgebildet ist.

8. Steckfitting nach Anspruch 7,
**dadurch gekennzeichnet, dass** die Haltezähne (13) gegenüber dem scheibenförmigen Teil des Klemmrings (10) abgewinkelt sind.

9. Steckfitting nach Anspruch 8,
**dadurch gekennzeichnet, dass** der Winkel 10 Grad bis 80 Grad, vorzugsweise 30 Grad bis 50 Grad beträgt.

10. Steckfitting nach einem der vorherigen Ansprüche,
**dadurch gekennzeichnet, dass** der Klemmring (10) aus einem metallischen Werkstoff gefertigt ist.

11. Steckfitting nach einem der vorherigen Ansprüche,
**dadurch gekennzeichnet, dass** die Hülse (7, 7a) auf das Grundteil (1) kraft- und formschlüssig aufgesetzt ist.

12. Steckfitting nach einem der vorherigen Ansprüche,
**dadurch gekennzeichnet, dass** in die Hülse (7) eine Kontrollöffnung (9) eingearbeitet ist oder die Hülse (7a) einen durchsichtigen Bereich aufweist.

13. Steckfitting nach einem der vorherigen Ansprüche,
**dadurch gekennzeichnet, dass** der Spannring (12, 12a, 12b, 12c, 12d) kraft- und formschlüssig mit der Hülse (7, 7a) verbunden ist.

14. Steckfitting nach einem der vorherigen Ansprüche,
**dadurch gekennzeichnet, dass** der Spannring (12, 12a, 12b, 12c, 12d) und die Hülse (7, 7a) einen Ringspalt (11) bilden, in dem der Klemmring (10) mit dem scheibenförmigen Teil festgelegt ist.

15. Steckfitting nach einem der vorherigen Ansprüche,
**dadurch gekennzeichnet, dass** der Spannring (12, 12a, 12b, 12c, 12d) in die Hülse (7, 7a) eingeschraubt ist.

16. Steckfitting nach einem der vorherigen Ansprüche,
**dadurch gekennzeichnet, dass** der Rohrträger (2) nach außen weisende umlaufende Widerhaken (5) aufweist.

17. Steckfitting nach Anspruch 16,
**dadurch gekennzeichnet, dass** die Widerhaken (5) eine einen Dichtring (6) aufnehmende Ringnut einschließen.

18. Steckfitting nach Anspruch 12,
**dadurch gekennzeichnet, dass** der durchsichtige Bereich durch eine Materialabtragung der Hülse (7a) gebildet ist.

19. Steckfitting nach einem der vorherigen Ansprüche,
**dadurch gekennzeichnet, dass** in dem Spannring (12b, 12c, 12d) benachbart zu der Ausnehmung (14) eine Innenringnut (16) zur Aufnahme eines Runddichtrings (6b) ausgebildet ist.

20. Steckfitting nach einem der vorherigen Ansprüche,
**dadurch gekennzeichnet, dass** eine die Haltezähne (13) des Klemmrings (10) abstützende Stützscheibe (26) vorgesehen ist.

21. Steckfitting nach einem der vorherigen Ansprüche,
**dadurch gekennzeichnet, dass** ein Kegelring (28) vorgesehen ist, dessen Kegelseiten (30a, 30b) mit dem Spannring (12d) und der Kegelringhülse (20c) zusammenwirken und an dessen Grundseite der Klemmring (10) oder die Stützscheibe (26) anliegt.

## Claims

1. Plug-in fitting for connection to at least one pipe (3), in particular a plastic-metal-plastic composite pipe, wherein the plug-in fitting has at least one connecting region for a connection to the pipe (3) and an end section of the pipe (3) can be inserted into the plug-in fitting as far as a collar (4), wherein the pipe (3) can be secured by means of a clamping ring (10) cooperating with the plug-in fitting, wherein the plug-in fitting comprises a base body (1) with an inner pipe support (2) and a sleeve (7, 7a) cooperating with the base body (1), wherein the pipe support (2) and the sleeve (7, 7a) form an annular space into which the pipe (3) can be inserted and wherein the clamping ring (10) is held in the sleeve (7, 7a) by a tensioning ring (12, 12a, 12b, 12c, 12d), **characterised in that** the tensioning ring (12a, 12b, 12c, 12d) has a recess on its inner circumference, which extends as far as the end facing the clamping ring (10), **in that** the recess is configured as a stepped recess (17) and **in that** a ring (18) is inserted in the stepped recess (17).

2. Plug-in fitting for connection to at least one pipe (3), in particular a plastic-metal-plastic composite pipe, wherein the plug-in fitting has at least one connecting region for a connection to the pipe (3) and an end section of the pipe (3) can be inserted into the plug-in fitting as far as a collar (4), wherein the pipe (3) can be secured by means of a clamping ring (10) cooperating with the plug-in fitting, wherein the plug-in fitting comprises a base body (1) with an inner pipe support (2) and a sleeve (7, 7a) cooperating with the base body (1), wherein the pipe support (2) and the sleeve (7, 7a) form an annular space into which the pipe (3) can be inserted and wherein the clamping ring (10) is held in the sleeve (7, 7a) by a tensioning ring (12, 12a, 12b, 12c, 12d), **characterised in that** the tensioning ring (12a, 12b, 12c, 12d) has a recess on its inner circumference, which extends as far as the end facing the clamping ring (10), **in that** the recess is configured as a conical annular recess (19) and **in that** a conical annular sleeve (20a, 20b, 20c) is inserted in the conical annular recess (19).

3. Plug-in fitting according to Claim 2, **characterised in that** the conical annular recess (19) and the conical annular sleeve (20a, 20b) have toothed structures (21a, 21b) in the cooperating regions.

4. Plug-in fitting according to one of Claims 2 and 3, **characterised in that** the conical annular sleeve (20a, 20b, 20c) has teeth (22) on the side cooperating with the pipe (3).

5. Plug-in fitting according to one of Claims 2 to 4, **characterised in that** the conical annular sleeve (20a, 20b, 20c) is made of metal.

6. Plug-in fitting according to Claim 5, **characterised in that** the conical annular sleeve (20a, 20b, 20c) has a gap (23) and/or flexural elastic regions (24).

7. Plug-in fitting according to any one of the preceding claims, **characterised in that** the clamping ring (10) is configured as disk-shaped with inwardly pointing retaining teeth (13).

8. Plug-in fitting according to Claim 7, **characterised in that** the retaining teeth (13) are angled with respect to the disk-shaped part of the clamping ring (10).

9. Plug-in fitting according to Claim 8, **characterised in that** the angle is 10 degrees to 80 degrees, preferably 30 degrees to 50 degrees.

10. Plug-in fitting according to any one of the preceding claims, **characterised in that** the clamping ring (10) is made of a metallic material.

11. Plug-in fitting according to any one of the preceding claims, **characterised in that** the sleeve (7, 7a) is placed non-positively and positively on the base part (1).

12. Plug-in fitting according to any one of the preceding claims, **characterised in that** an inspection opening (9) is incorporated in the sleeve (7) or the sleeve (7a) has a transparent region.

13. Plug-in fitting according to any one of the preceding claims, **characterised in that** the tensioning ring (12, 12a, 12b, 12c, 12d) is connected non-positively and positively to the sleeve (7, 7a).

14. Plug-in fitting according to any one of the preceding claims, **characterised in that** the tensioning ring (12, 12a, 12b, 12c, 12d) and the sleeve (7, 7a) form an annular gap (11) in which the clamping ring (10) is fixed with the disk-shaped part.

15. Plug-in fitting according to any one of the preceding claims, **characterised in that** the tensioning ring (12, 12a, 12b, 12c, 12d) is screwed into the sleeve (7, 7a).

16. Plug-in fitting according to any one of the preceding claims, **characterised in that** the pipe support (2) has outwardly pointed circumferential barbs (5).

17. Plug-in fitting according to Claim 16, **characterised in that** the barbs (5) enclose an annular groove receiving a sealing ring (6).

18. Plug-in fitting according to Claim 12, **characterised in that** the transparent region is formed by removal of material from the sleeve (7a).

19. Plug-in fitting according to any one of the preceding claims, **characterised in that** an inner annular groove (16) for receiving a round sealing ring (6b) is formed in the tensioning ring (12b, 12c, 12d) adjacent to the recess (14).

20. Plug-in fitting according to any one of the preceding claims, **characterised in that** a back-up washer (26) which supports the retaining teeth (13) of the clamping ring (10) is provided.

21. Plug-in fitting according to any one of the preceding claims, **characterised in that** a conical ring (28) is provided, the conical sides (30a, 30b) whereof cooperate with the tensioning ring (12d) and the conical annular sleeve (20c) and the clamping ring (10) or the back-up washer (26) abut against the base side thereof.

## Revendications

1. Raccord à emboîtement pour relier au moins un tuyau (3), en particulier un tuyau composite en matière plastique/ métal/ matière plastique, dans lequel le raccord à emboîtement présente au moins une zone de raccordement pour une liaison avec le tuyau (3) et une section d'extrémité du tuyau (3) est enfichable dans le raccord à emboîtement jusqu'à une embase (4), dans lequel le tuyau (3) peut être fixé au moyen d'une bague de serrage (10) coopérant avec le raccord à emboîtement, dans lequel le raccord à emboîtement présente un corps de base (1) avec un support de tuyau intérieur (2) et un manchon (7, 7a) coopérant avec le corps de base (1), dans lequel le support de tuyau (2) et le manchon (7, 7a) forment un espace annulaire dans lequel le tuyau (3) est enfichable, et dans lequel la bague de serrage (10) est retenue dans le manchon (7, 7a) par un collier tendeur (12, 12a, 12b, 12c, 12d), **caractérisé en ce que** le collier tendeur (12a, 12b, 12c, 12d) présente sur sa circonférence intérieure un évidement qui s'étend jusqu'à l'extrémité orientée vers la bague de serrage (10), **en ce que** l'évidement est réalisé comme un évidement gradué (17), et **en ce qu'**une bague (18) est insérée dans l'évidement gradué (17).

2. Raccord à emboîtement pour relier au moins un tuyau (3), en particulier un tuyau composite en matière plastique/ métal/ matière plastique, dans lequel le raccord à emboîtement présente au moins une zone de raccordement pour une liaison avec le tuyau (3) et une section d'extrémité du tuyau (3) est enfichable dans le raccord à emboîtement jusqu'à une embase (4), dans lequel le tuyau (3) peut être fixé au moyen d'une bague de serrage (10) coopérant avec le raccord à emboîtement, dans lequel le raccord à emboîtement présente un corps de base (1) avec un support de tuyau intérieur (2) et un manchon (7, 7a) coopérant avec le corps de base (1), dans lequel le support de tuyau (2) et le manchon (7, 7a) forment un espace annulaire dans lequel le tuyau (3) est enfichable, et dans lequel la bague de serrage (10) est retenue dans le manchon (7, 7a) par un collier tendeur (12, 12a, 12b, 12c, 12d), **caractérisé en ce que** le collier tendeur (12, 12a, 12b, 12c, 12d) présente sur sa circonférence intérieure un évidement qui s'étend jusqu'à l'extrémité orientée vers la bague de serrage (10), **en ce que** l'évidement est réalisé comme un évidement annulaire conique (19) et **en ce qu'**un manchon annulaire conique (20a, 20b, 20c) est inséré dans l'évidement annulaire conique (19).

3. Raccord à emboîtement selon la revendication 2, **caractérisé en ce que** l'évidement annulaire conique (19) et le manchon annulaire conique (20a, 20b) présentent des dentures (21a, 21b) dans les zones qui coopèrent.

4. Raccord à emboîtement selon l'une quelconque des revendications 2 et 3, **caractérisé en ce que** le manchon annulaire conique (20a, 20b, 20c) présente des dents (22) sur le côté coopérant avec le tuyau (3).

5. Raccord à emboîtement selon l'une quelconque des revendications 2 à 4, **caractérisé en ce que** le manchon annulaire conique (20a, 20b, 20c) est réalisé en métal.

6. Raccord à emboîtement selon la revendication 5, **caractérisé en ce que** le manchon annulaire conique (20a, 20b, 20c) présente une fente (23) et/ou des zones flexibles (24).

7. Raccord à emboîtement selon l'une quelconque des revendications précédentes, **caractérisé en ce que** la bague de serrage (10) est réalisée en forme de disque avec des dents de retenue (13) orientées vers l'intérieur.

8. Raccord à emboîtement selon la revendication 7, **caractérisé en ce que** les dents de retenue (13) sont coudées par rapport à la pièce en forme de disque de la bague de serrage (10).

9. Raccord à emboîtement selon la revendication 8, **caractérisé en ce que** l'angle mesure de 10 degrés à 80 degrés, de préférence de 30 degrés à 50 degrés.

10. Raccord à emboîtement selon l'une quelconque des revendications précédentes, **caractérisé en ce que** la bague de serrage (10) est réalisée à partir d'un matériau métallique.

11. Raccord à emboîtement selon l'une quelconque des revendications précédentes, **caractérisé en ce que** le manchon (7, 7a) est placé sur la pièce de base (1) par adhérence et par complémentarité de forme.

12. Raccord à emboîtement selon l'une quelconque des revendications précédentes, **caractérisé en ce que** dans le manchon (7) est pratiquée une ouverture de contrôle (9) ou que le manchon (7a) présente une zone transparente.

13. Raccord à emboîtement selon l'une quelconque des revendications précédentes, **caractérisé en ce que** le collier tendeur (12, 12a, 12b, 12c, 12d) est relié au manchon (7, 7a) par adhérence et par complémentarité de forme.

14. Raccord à emboîtement selon l'une quelconque des revendications précédentes, **caractérisé en ce que** le collier tendeur (12, 12a, 12b, 12c, 12d) et le manchon (7, 7a) forment une rainure annulaire (11) dans laquelle est immobilisée la bague de serrage (10) avec la pièce en forme de disque.

15. Raccord à emboîtement selon l'une quelconque des revendications précédentes, **caractérisé en ce que** le collier tendeur (12, 12a, 12b, 12c, 12d) est vissé dans le manchon (7, 7a).

16. Raccord à emboîtement selon l'une quelconque des revendications précédentes, **caractérisé en ce que** le support de tuyau (2) présente des barbes périphériques (5) orientées vers l'extérieur.

17. Raccord à emboîtement selon la revendication 16, **caractérisé en ce que** les barbes (5) enferment une rainure annulaire recevant une bague d'étanchéité (6).

18. Raccord à emboîtement selon la revendication 12, **caractérisé en ce que** la zone transparente est formée par enlèvement de copeaux du manchon (7a).

19. Raccord à emboîtement selon l'une quelconque des revendications précédentes, **caractérisé en ce que** dans le collier tendeur (12b, 12c, 12d), à côté de l'évidement (14), une rainure annulaire intérieure (16) pour recevoir une bague d'étanchéité circulaire (6b) est réalisée.

20. Raccord à emboîtement selon l'une quelconque des revendications précédentes, **caractérisé en ce qu'**un disque d'appui (26) supportant les dents de retenue (13) de la bague de serrage (10) est prévu.

21. Raccord à emboîtement selon l'une quelconque des revendications précédentes, **caractérisé en ce qu'**une bague conique (28) est prévue dont les côtés coniques (30a, 30b) coopèrent avec le collier tendeur (12d) et le manchon annulaire conique (20c) et sur la base de laquelle s'applique la bague de serrage (10) ou le disque d'appui (26).
